# EUROPÄISCHE PATENTSCHRIFT

(11) **EP 0 771 056 B1**
(45) Veröffentlichungstag und Bekanntmachung des Hinweises auf die Patenterteilung: **15.05.2002**
(21) Anmeldenummer: 96116988.5
(22) Anmeldetag: 22.10.1996
(51) Int. Cl.: H02B 11/127, H02B 11/133

(54) **Einschub für Schaltgeräte oder Geräteeinheiten**
Drawer for switchgear or apparatus
Tiroir pour dispositifs de commutation ou appareillage électrique

(30) Priorität: 25.10.1995 DE 19539658
(43) Veröffentlichungstag der Anmeldung: 02.05.1997
(73) Patentinhaber: AEG Niederspannungstechnik GmbH & Co. KG, 24534 Neumünster (DE)
(72) Erfinder: Grimm, Jörn, Dipl.-Ing., 24253 Prasdorf (DE); Petersen, Ulrich, Dipl.-Ing., 24229 Dänischenhagen (DE)
(74) Vertreter: Leson, Thomas Johannes Alois, Dipl.-Ing.

(56) Entgegenhaltungen:
- BE-A- 535 860
- US-A- 3 019 309
- US-A- 3 021 400
- US-A- 3 030 463

## Beschreibung

Die Erfindung betrifft einen Einschub für Schaltgeräte oder Geräteeinheiten nach dem Oberbegriff des Anspruchs 1.

Ein derartiger Einschub in Schaltschränke geht aus der DE 27 17 691 C3 hervor, wobei allerdings der Einschub lediglich eine Verstelleinrichtung in Form eines Schneckentriebes zum Verschieben von Hauptkontakten in Richtung von Gegenkontakten aufweist. Der üblicherweise zum Betätigen der Schaltgeräte vorhandene separate Vorderantrieb, mit dem die auf dem Einschub befindlichen Schattgeräte sich zumeist von außen betätigen lassen, ist in dieser Literaturstelle nicht beschrieben. Gleichwohl sind derartige Einschübe auf dem Markt.

Ferner ist aus der US-A-3 021 400 ein Einschub für Schaltgeräte in einen Schaltschrank bekannt. Mit einem Vorderantrieb, der als Schneckengetriebe ausgebildet ist, kann wahlweise das Schaltgerät in den Schaltschrank gefördert werden (über den Eingriff zwischen schwenkbaren Armen mit am Schaltschrank ausgebildeten Zapfen) oder es kann mit demselben Antrieb eine Betätigung des Schaltgeräts (Öffnen und Schließen der Kontakte) erfolgen. Die Umschaltung zwischen diesen beiden Betriebsarten des Vorderantriebs erfolgt über einen manuell zu betätigenden Wählhebel.

Aus der US-A- 3 030 463 ist die Koppelbarkeit bzw. Entkoppelbarkeit von Wellen mittels Relativverschiebung in deren Axialrichtung bekannt, wobei der Vorderantrieb ausschließlich für das Fördern eines Schaltgeräts in einen Schaltschrank dient.

Der Erfindung liegt die Aufgabe zugrunde, einen Einschub der vorerwähnten Art so auszugestalten, daß jeweils das Verschieben der Hauptkontakte des Einschubs und das Betätigen der Schaltgeräte über den gleichen Antrieb und mit nur einem Drehgriff von außerhalb des Schaltschrankes durchführbar ist.

Diese Aufgabe wird durch einen Einschub mit den kennzeichnenden Merkmalen des Anspruchs 1 gelöst. Weiterbildungen und vorteilhafte Ausgestaltungen der Erfindung sind Gegenstände der Unteransprüche.

Die Erfindung hat den Vorteil, daß für das Einfahren der Hauptkontakte und das Betätigen der Schaltgeräte nur noch ein externer Antrieb erforderlich ist. Damit entfallen Teile der Verriegelungsmechanik und man gelangt zu einer Einhandbetätigung des Einschubs, insbesondere bei sogenannten Motorschaltschränken. Die Nutzung des Vorderantriebs zum Verschieben der Hauptkontakte in einem ersten vorbestimmten Drehbereich bis zu einer Raststellung erfüllt dabei auch sicherheitsrelevante Gesichtspunkte, da vor dem Schalten der Schaltgeräte immer erst die Hauptkontakte geschlossen sind. Neben einem einfachen Aufbau des Einschubes lassen sich zudem ein Großteil der schon vorhandenen Bauelemente unverändert nutzen.

Anhand der Zeichnung ist die Erfindung nachstehend an einem Ausführungsbeispiel näher erläutert.
- Fig. 1: zeigt die wesentlichen Baugruppen des Einschubs schematisch vereinfacht in einer perspektivischen Darstellung, während in
- Fig. 2: der Einschub in einer Seitenansicht ebenfalls vereinfacht wiedergegeben ist. In
- Fig. 3: sind die Kupplungsmittel in größerem Maßstab im Schnitt gezeigt.

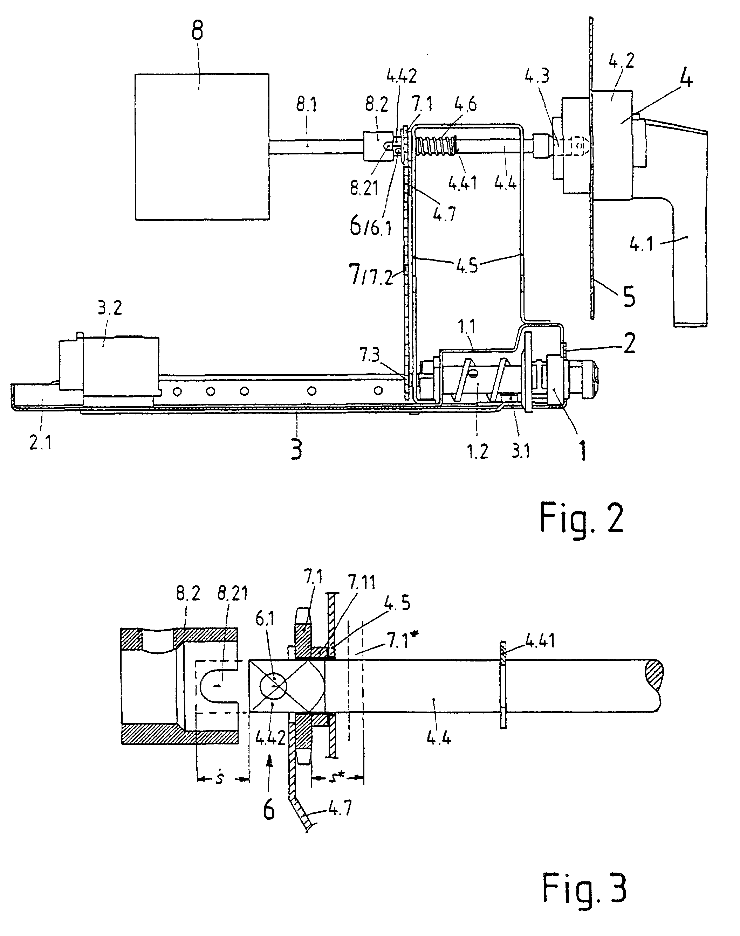

Der vereinfacht dargestellte Einschub weist einen Schneckenantrieb 1 auf, der mittels eines Schneckenbockes 1.1 am lediglich mit seiner Bodenplatte 2.1 angedeuteten Einschubrahmen 2 gehalten ist (Fig. 2). Im Schneckenbock ist eine Schnecke 1.2 drehbar gelagert, in die ein Schieber 3 mit einem vorstehend befestigten Zapfen 3.1 eingreift. Der in der Bodenplatte 2.1 in Achsverlängerung der Schnecke geführte Schieber trägt am gegenüberliegenden Ende sogenannte Einfahrkontakte 3.2, die sich über den Schneckenantrieb verschieben lassen. Sie wirken mit nicht gezeigten Gegenkontakten oder Sammelschienen des nur mit seiner Tür 5 gezeigten Schaltschrankes auf an sich bekannte Weise zusammen und bilden die Hauptkontakte zwischen Schaltschrank und Einschub.

Desweiteren weist der Einschub einen Vorderantrieb 4 auf, bei dem ein außerhalb des Schaltschranks angeordneter Drehgriff 4.1 in einer Frontplatte 4.2 gelagert ist. Die Frontplatte ist an der Schaltschranktür 5 befestigt und greift mit einer Mitnehmerkupplung 4.3 in das Innere des Schaltschranks. Die Mitnehmerkupplung 4.3 gleicht das aufgrund von Toleranzen und zum Türöffnen erforderliche Spiel zwischen dem manuell zu betätigenden Drehgriff 4.1 und einer damit im Kraftschluß befindlichen Vorderantriebswelle 4.4 aus, die ihrerseits am Einschubrahmen in einem Lagerbock 4.5 oberhalb des Schneckenbockes 1.1 drehbar sowie längsverschieblich angeordnet ist. Dabei wird die Vorderantriebswelle 4.4 mittels einer Druckfeder 4.6, die sich einerseits an einem der Schenkel des Lagerbocks 4.5 und andererseits an einer Anschlagscheibe 4.41 der Vorderantriebswelle abstützt, in Richtung Frontplatte und Drehgriff gedrückt. Begrenzt wird der Federweg der Druckfeder 4.6 bei geöffneter Tür 5 durch einen quer in der Vorderantriebswelle 4.4 angeordneten Stift 6.1, der hinter einem am Lagerbock 4.5 befestigten Halteblech 4.7 zur Anlage gelangt und der Teil von noch näher zu beschreibenden Kupplungsmitteln 6 ist.

Die überwiegend einen Kreisquerschnitt aufweisende Vorderantriebswelle 4.4, die in daran angepaßten Bohrungen des Lagerbocks 4.5 drehbar sowie um einen vorgegebenen Weg "s" entgegen der Kraft der Druckfeder 4.6 axial verschieblich angeordnet ist, hat am freien Ende im Bereich des Stiftes 6.1 einen prismatischen Ansatz 4.42. Dieser hat vorzugsweise einen quadratischen Querschnitt und bildet somit ein Vierkant, wie insbesondere aus Fig. 3 hervorgeht. Dabei entspricht die Schlüsselweite des Vierkants genau dem Durchmesser der Vorderantriebswelle 4.4, zumindest wie er neben dem Ansatz 4.42 im Schiebebereich "s*" eines auf der Vorderantriebswelle gelagerten Triebrades 7.1 vorhanden ist. Zugleich ist der Übergang vom kreisrunden auf den quadratischen Querschnitt konusförmig ausgebildet.

Das zwischen dem einen Schenkel des Lagerbocks 4.5 unter Beilage einer Distanzscheibe 7.11 und dem Halteblech 4.7 stirnseitig geführte Triebrad 7.1 als Teil einer noch näher zu erläuternden mechanischen Übertragung 7 hat dabei eine an den Vierkantansatz 4.42 angepaßte quadratische Ausnehmung und kann somit beim Verschieben der Vorderantriebswelle 4.4 um den Weg "s" problemlos vom Vierkantansatz innerhalb des schematisch angedeuteten Schiebebereiches "s*" auf den zylindrischen Teil der Vorderantriebswelle 4.4 gleiten und insbesondere auch wieder zurückgleiten. Beim Drehen der Vorderantriebswelle 4.4 wird somit das Triebrad 7.1 im Bereich des Vierkantansatzes mitgenommen, während es bei in axialer Richtung verschobener Welle mit seiner quadratischen Ausnehmung ohne Höhenversatz auf dem zylindrischen Querschnitt der Antriebswelle frei läuft.

Das Triebrad 7.1, welches umfangsseitig eine Verzahnung aufweist, ist im Ausführungsbeispiel über eine Rollenkette 7.2 mit einem Ritzel 7.3 verbunden, welches koaxial an der Stirnseite der Schnecke 1.2 angeordnet ist. Über das Triebrad 7.1, die Rollenkette 7.2 und das Ritzel 7.3 ist folglich eine mechanische schlupflose Übertragung 7 zwischen Vorderantrieb 4 und Schneckenantrieb 1 vorhanden, sofern bei der manuellen Drehbewegung am Drehgriff 4.1 die sich mitdrehende Antriebswelle 4.4 über den prismatischen Ansatz 4.42 das Triebrad 7.1 antreibt. Die mechanische Übertragung der Drehbewegungen vom Vorderantrieb zum Schneckenantrieb ist allerdings nur beispielhaft gewählt und ließe sich ebenso durch einen Zahnriementrieb oder jeden anderen schlupffreien Trieb realisieren.

Desweiteren ist im Einschubrahmen ein lediglich schematisch angeordnetes Schaltgerät 8 angedeutet, welches ein- oder mehrpolig ausgebildet sein kann, oder auch mehrere Geräteeinheiten umfaßt. Aus dem Schaltgerät führt eine Schaltwelle 8.1, die zumindest annäherend koaxial zur Vorderantriebswelle angeordnet ist und die in der Ausschaltstellung stirnseitig mit einem Mitnehmer 8.2 etwa bis vor den prismatischen Ansatz 4.42 der Vorderantriebswelle 4.4 vorsteht. (Fig. 2, Fig. 3) Der Mitnehmer 8.2 ist hülsenförmig ausgebildet und hat im hohlzylindrischen Wandbereich zwei diametral gegenüberliegende Ausschnitte 8.21, die mit dem Stift 6.1 beziehungsweise mit dessen beiderseits des Ansatzes vorstehenden Enden korrespondieren. Sofern die Vorderantriebswelle 4.4 aus der Lage nach Fig. 3 um den Weg "s" verschoben wird, kommt der Stift 6.1 in die Ausschnitte 8.21 zu liegen, während sich das Triebrad 7.1 vom Halteblech 4.7 seitlich gestützt auf den zylindrischen Teil der Vorderantriebswelle in die Lage 7.1* schiebt. Da dieser vorbeschriebene Kupplungsvorgang nur in einer bestimmten Stellung der Schaltwelle 8.1 beziehungsweise des Mitnehmers 8.2 und der Vorderantriebswelle 4.4 möglich sein darf (Lage nach Fig. 3), sind in der Frontplatte Rastmittel vorgesehen, die den Drehbereich des Drehgriffs 4.1 unterteilen.

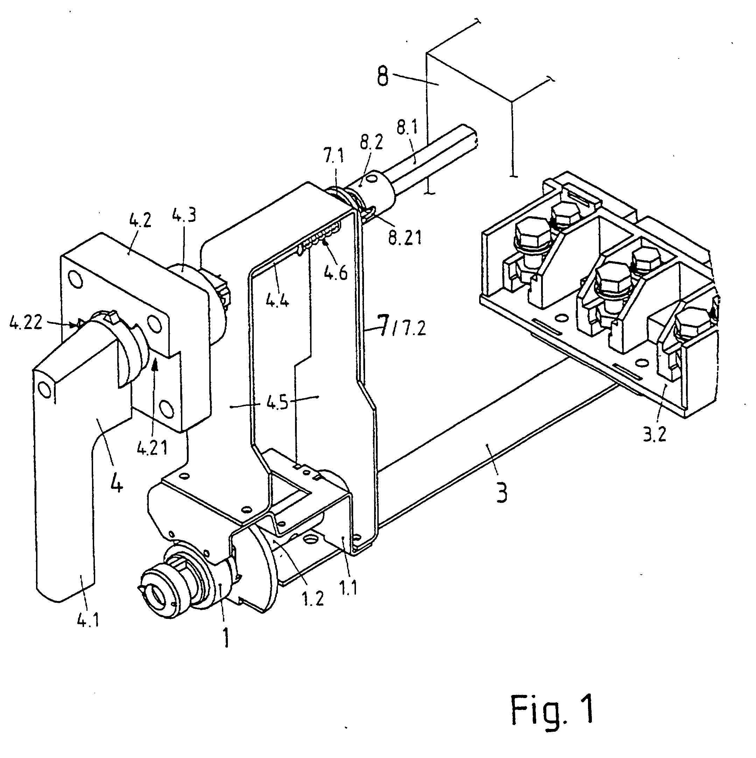

Mittels lediglich in Fig. 1 schematisch angedeuteter Kulissen 4.21 ist dabei für den Drehgriff ein erster Drehbereich von vorzugsweise 225 ° Drehwinkel vorgegeben, bis eine Raststellung erreicht ist. In diesem Drehbereich befindet sich die Vorderantriebswelle 4.4 etwa in einer Lage, wie in Fig. 2 gezeigt, d. h. unter der Wirkung der Druckfeder 4.6 wird die Vorderantriebswelle in Richtung der Mitnehmerkupplung 4.3 gedrückt, so daß eine Drehbewegung am Drehgriff 4.1 über das vom Vierkantansatz 4.42 mitgenommene Triebrad 7.1 und die Rollenkette 7.2 auf das Ritzel 7.3 und damit letztlich auf die Schnecke 1.2 übertragen wird. Die sich mitdrehende Schnecke schiebt dabei den Zapfen 3.1 und damit den Schieber 3 von der gezeigten Ausschaltstellung in eine Position, in der die Einfahrkontakte 3.2 mit Gegenkontakten des Schaltschrankes kontaktieren. Dabei sind die Bewegungssabläufe des Drehgriffs 4.1, der Schnecke 1.2 und der Fahrweg des Schiebers 3, sowie die Übersetzung des Rollenkettentriebes derart aufeinander abgestimmt, daß am Ende des ersten Drehbereiches von etwa 225 ° mit Erreichen der Raststellung des Drehgriffes 4.1 die Hauptkontakte geschlossen sind.

Erst danach läßt sich der Drehgriff 4.1 gegen die Kraft der Druckfeder 4.6 manuell niederdrücken und damit auch die Vorderantriebswelle 4.4 um den Weg "s" verschieben. Das Triebrad 7.1 wird dabei vom Vierkantansatz 4.42 entkoppelt, während sich der Stift 6.1 lagerichtig in die Ausschnitte 8.21 des Mitnehmers 8.2 verschiebt. Damit ist der Vorderantrieb 1 vom Schneckenantrieb 4 entkoppelt und jetzt mit der Schaltwelle 8.1 des Schaltgerätes gekuppelt. Durch Weiterdrehen des Drehgriffes 4.1 um etwa 90 ° erfolgt dann das Schalten des mit einem Sprungschaltwerk versehenen Schaltgerätes auf an sich bekannte Art. Eine in die Frontplatte 4.2 integrierte lediglich in Fig. 1 angedeutete Nockenbahn 4.22 und ein entsprechender Nocken am Drehgriff verhindern dabei in diesem zweiten Drehbereich eine Rückverschiebung der Vorderantriebswelle 4.4 durch die Druckfeder 4.6, so daß der eingekuppelte Zustand zur Schaltwelle 8.1 erhalten bleibt.

Erst durch einen Abschaltvorgang des Schaltgerätes oder nach einem manuellen Ausschaltvorgang am Drehgriff 4.1 bis zurück in die Raststellung um etwa 90 ° wird die Vorderantriebswelle 4.4 unter der Wirkung der Druckfeder 4.6 am Mitnehmer 8.2 ausgekuppelt. Zugleich gleitet das vom zylindrischen Teil der Vorderantriebswelle 4.4 höhengleich in seiner quadratischen Ausnehmung gehaltene Triebrad 7.1 aufgrund der eingangs erwähnten Zusammenhänge über den Konus auf den Vierkantansatz 4.42. Erst danach ist die Raststellung freigegeben und ein Rückdrehen des Vorderantriebs am Drehgriff 4.1 innerhalb des ersten Drehbereichs möglich, so daß über den Rollenkettentrieb beziehungsweise die mechanische Übertragung die Rückdrehung des Schneckenantriebes 1 und damit ein Öffnen der Hauptkontakte stattfinden kann.

Die den ersten und zweiten Drehbereich des Drehgriffs 4.1 festlegenden Kulissen 4.21 beziehungsweise die Nockenbahn 4.22 in der Frontplatte sind dabei so aufeinander abgestimmt, daß mit dem Drehgriff keinesfalls eine vollständige Umdrehung möglich ist.

Die vorgegebenen Drehwinkel von 225 ° im ersten Drehbereich und 90 ° im zweiten Drehbereich ermöglichen dabei ein sinnvolles Zusammenspiel des Vorderantriebes einerseits zur Kontaktierung der Hauptkontakte und andererseits zur Betätigung der Schaltgeräte. Andere Drehwinkel, insbesondere im ersten Drehbereich von beispielsweise lediglich einer halben Umdrehung bis nahezu einer dreiviertel Umdrehung und andere mechanische Übertragungen 7 oder die Ausbildung der Kupplungsmittel 6 sind ebenso denkbar, ohne den Bereich der nach folgenden Patentansprüche zu verlassen.

## Patentansprüche

1. Einschub für Schaltgeräte (8) oder Geräteeinheiten in einen Schaltschrank, mit
einem ortsfest am Einschubrahmen (2) angeordneten Schneckenantrieb (1) zum Verschieben von Hauptkontakten (3.2) des Einschubs (2) in Richtung von Gegenkontakten oder Sammelschienen des Schaltschrankes, und
einem einen Drehgriff (4.1) aufweisenden Vorderantrieb (4) zum Betätigen der Schaltgeräte (8), wobei der Vorderantrieb (4) in einem ersten vorbestimmten Drehbereich mittels einer mechanischen Übertragung (7) mit dem Schneckenantrieb (1) gekoppelt ist und nach Zurücklegen dieses Drehbereichs eine Raststellung erreicht,
**dadurch gekennzeichnet, dass**
aus dieser Raststellung mittels eines anschließenden manuellen Entsperrvorgangs durch Verschieben einer Vorderantriebswelle (4.4) in Achsrichtung die mechanische Übertragung (7) vom Schneckenantrieb (1) entkoppelt und zugleich der Vorderantrieb (4) mit einer Schaltwelle (8.1) der Schaltgeräte (8) kuppelbar ist, wobei nachfolgend im weiteren Drehbereich des Vorderantriebs (4) das Betätigen der Schaltgeräte (8) über die Schaltwelle (8.1) durchführbar ist.

2. Einschub nach Anspruch 1, **dadurch gekennzeichnet, dass** in dem manuellen Entsperrvorgang die Vorderantriebswelle (4.4) durch Niederdrücken des Drehgriffs (4.1) gegen ein Federelement (4.6) verschiebbar ist.

3. Einschub nach Anspruch 1 und 2, **dadurch gekennzeichnet, daß** nach dem Entsperrvorgang im weiteren Drehbereich des Vorderantriebs (4) das Zurückfedern der Vorderantriebswelle (4.4) in die Raststellung mittels eines auf einer Nockenbahn (4.22) gleitenden Nocken ausgeschlossen ist.

4. Einschub nach Anspruch 1 bis 3, **dadurch gekennzeichnet, daß** an der Vorderantriebswelle (4.4) Kupplungsmittel (4.42 bzw. 6.1, 8.2) sowohl für ein Triebrad (7.1) der mechanischen Übertragung (7) als auch für die Schaltwelle (8.1) der Schaltgeräte (8) angeordnet sind.

5. Einschub nach Anspruch 1 bis 4, **dadurch gekennzeichnet, daß** als Kupplungsmittel für das Triebrad (7.1) an der Vorderantriebswelle (4.4) ein prismatischer Ansatz (4.42), vorzugsweise ein Vierkantansatz, angeordnet ist, der mit einer entsprechenden Ausnehmung im Triebrad (7.1) formschlüssig zusammenwirkt.

6. Einschub nach einem der Ansprüche 1 bis 5, **dadurch gekennzeichnet, daß** der prismatische Ansatz (4.42) einen maximal denkbaren zylindrischen Grundkörper einschließt, dessen Durchmesser dem Durchmesser der Vorderantriebswelle (4.4) neben dem Ansatz (4.42) in deren beim Entsperrvorgang wirksamen Schiebebereich (s*) entspricht.

7. Einschub nach einem der Ansprüche 1 bis 5, **dadurch gekennzeichnet, daß** die Vorderantriebswelle (4.4) und die stirnseitig hohlzylindrisch ausgebildete Schaltwelle (8.1 bzw. 8.2) mittels einer Stiftkupplung (6.1, 8.21) miteinander kuppelbar sind.

8. Einschub nach einem der Ansprüche 1 bis 7, **dadurch gekennzeichnet, daß** die Vorderantriebswelle (4.4) in einem Lagerbock (4.5) angeordnet ist, der dem ein Ritzel (7.3) für die mechanische Übertragung (7) aufweisenden Schneckenantrieb (1) lagerichtig zugeordnet ist.

9. Einschub nach einem der Ansprüche 1 bis 8, **dadurch gekennzeichnet, daß** als mechanische Übertragung (7) zwischen Vorderantrieb (4) und Schneckenantrieb (1) ein Rollenkettentrieb (7.2) angeordnet ist.

10. Einschub nach einem der Ansprüche 1 bis 8, **dadurch gekennzeichnet, daß** als mechanische Übertragung (7) ein Riementrieb, insbesondere ein Zahnriementrieb angeordnet ist.

11. Einschub nach einem der Ansprüche 1 bis 10, **dadurch gekennzeichnet, daß** der erste Drehbereich des Vorderantriebs (4) bis zur Raststellung etwa einen Drehwinkel von 180 ° bis 270 °, vorzugsweise von 225 ° umfaßt und damit etwa einer halben bis dreiviertel Umdrehung des Drehgriffs (4.1) entspricht.

12. Einschub nach einem der Ansprüche 1 bis 10, **dadurch gekennzeichnet, daß** der weitere Drehbereich für das Betätigen der Schaltgeräte (8) etwa einen Drehwinkel von 90 ° umfaßt und damit etwa einer Vierteldrehung des im entsprechenden Bereich von der Nockenbahn (4.22) gegen die Kraft des Federelementes (4.6) vertieft gehaltenen Drehgriffs (4.1) entspricht.

## Claims

1. Slide-in unit for switching devices (8) or equipment units in a switchgear cabinet, with a wormgear drive (1), arranged in a fixed position on the frame (2) of the slide-in unit, for displacing main contacts (3.2) of the slide-in unit (2) in the direction of countercontacts or busbars in the switchgear cabinet, and
a front drive (4), featuring a rotating handle (4.1), for operating the switching devices (8), whereby, in a first predetermined rotational range, the front drive (4) is coupled with the wormgear drive (1) by means of a mechanical transmission (7), and after passing through this rotational range reaches a locking position,
**characterised in that**
from this locking position, the mechanical transmission (7) can be decoupled from the wormgear drive (1) by means of a subsequent manual unlocking action, through displacement of a front drive shaft (4.4) in an axial direction, and at the same time the front drive (4) can be coupled with a switching shaft (8.1) of the switching devices (8), whereby, subsequently, the operation of the switching devices (8) can be carried out in the further rotational range of the front drive (4) by means of the switching shaft (8.1).

2. Slide-in unit in accordance with claim 1, **characterised in that**, in the manual unlocking action, the front drive shaft (4.4) can be displaced by pressing down the rotating handle (4.1) against a spring element (4.6).

3. Slide-in unit in accordance with claims 1 and 2, **characterised in that**, after the manual unlocking action, in the further rotational range of the front drive (4), the springing-back of the front drive shaft (4.4) into the locking position is prevented by means of a cam sliding in a camway (4.22).

4. Slide-in unit in accordance with claims 1 to 3, **characterised in that** coupling elements (4.42 and 6.1, 8.2) for both a driving wheel (7.1) of the mechanical transmission (7) and the switch shaft (8.1) of the switching devices (8) are arranged on the front drive shaft (4.4).

5. Slide-in unit in accordance with claims 1 to 4, **characterised in that** a prismatic shoulder (4.42), preferably a rectangular shoulder, is arranged on the front drive shaft (4.4) as a coupling element for the driving wheel (7.1), interacting in a form-locking manner with a corresponding recess in the driving wheel (7.1).

6. Slide-in unit in accordance with one of claims 1 to 5, **characterised in that** the prismatic shoulder (4.42) encloses a maximum conceivable cylindrical parent body, the diameter of which corresponds to the diameter of the front drive shaft (4.4) next to the shoulder (4.42) within its sliding range (s*) which is effective during the unlocking action.

7. Slide-in unit in accordance with one of claims 1 to 5, **characterised in that** the front drive shaft (4.4) and the switching shaft (8.1 or 8.2), which is formed as a hollow cylinder at its end, can be coupled together by means of a pin coupling (6.1, 8.21).

8. Slide-in unit in accordance with one of claims 1 to 7, **characterised in that** the front drive shaft (4.4) is arranged in a bearing bracket (4.5) which is aligned with an associated wormgear drive (1) which features a pinion for the mechanical transmission (7).

9. Slide-in unit in accordance with one of claims 1 to 8, **characterised in that** a roller-chain drive (7.2) is arranged as mechanical transmission (7) between the front drive shaft (4.4) and wormgear drive (1).

10. Slide-in unit in accordance with one of claims 1 to 8, **characterised in that** a belt drive, especially a toothed belt drive, is arranged as the mechanical transmission (7).

11. Slide-in unit in accordance with one of claims 1 to 10, **characterised in that** the first rotational range of the front drive (4) up to the locking position comprises a rotational angle of around 180° to 270°, preferably 225°, thus corresponding to around a half- to three-quarters rotation of the rotating handle (4.1).

12. Slide-in unit in accordance with one of claims 1 to 10, **characterised in that** the further rotational range for operating the switching devices (8) comprises a rotational angle of around 90° and thus around a quarter rotation of the rotating handle (4.1) which is held depressed against the force of the spring element (4.6) in the corresponding range of the camway (4.22).

## Revendications

1. Tiroir pour des appareils de commutation (8) ou des unités d'appareils dans une armoire de commutation comportant
un mécanisme d'entraînement à vis (1) monté stationnaire sur le châssis de tiroir (2) pour déplacer des contacts principaux (3.2) du tiroir (2) en direction de contacts conjugués ou de barres omnibus de l'armoire de commutation et
un dispositif d'entraînement avant (4) qui comprend une poignée tournante (4.1) pour actionner les appareils de commutation (8), le dispositif d'entraînement avant (4), dans une première zone de rotation prédéterminée, étant couplé au mécanisme d'entraînement à vis (1) par l'intermédiaire d'une transmission mécanique (7) et, après avoir parcouru cette zone de rotation, atteignant une position d'encliquetage,
**caractérisé en ce que**
dans cette position d'encliquetage, par une opération manuelle consécutive de déverrouillage consistant à déplacer dans la direction axiale un arbre d'entraînement avant (4.4), la transmission mécanique (7) est découplée du mécanisme d'entraînement à vis (1) et, simultanément, le mécanisme d'entraînement avant (4) peut être couplé à un arbre de commutation (8.1) des appareils de commutation (8), les appareils de commutation (8) étant ensuite actionnés par l'intermédiaire de l'arbre de commutation (8.1) dans la zone de rotation suivante du mécanisme d'entraînement avant (4).

2. Tiroir selon la revendication 1, **caractérisé en ce que** dans l'opération manuelle de déverrouillage, l'arbre d'entraînement avant (4.4) peut être déplacé en enfonçant la poignée tournante (4.1) à l'encontre d'un élément élastique (4.6).

3. Tiroir selon les revendications 1 et 2, **caractérisé en ce qu'**après l'opération de déverrouillage, dans la zone de rotation suivante du mécanisme d'entraînement avant (4), le retour élastique de l'arbre d'entraînement avant (4.4) dans la position d'encliquetage est empêché par une came qui glisse sur un chemin de came (4.22).

4. Tiroir selon les revendications 1 à 3, **caractérisé en ce que** des moyens de couplage (4.42 ou 6.1, 8.2) sont prévus sur l'arbre d'entraînement avant (4.4) à la fois pour une roue de commande (7.1) de la transmission mécanique (7) et pour l'arbre de commutation (8.1) des appareils de commutation (8).

5. Tiroir selon les revendications 1 à 4, **caractérisé en ce qu'**il est prévu comme moyen de couplage pour la roue de commande (7.1), sur l'arbre d'entraînement avant (4.4), un embout (4.42) en forme de prisme, de préférence un embout carré, qui coopère par complémentarité de formes avec un évidement adapté dans la roue de commande (7.1).

6. Tiroir selon une des revendications 1 à 5, **caractérisé en ce que** l'embout (4.42) en forme de prisme comporte un corps de base maximal, dont le diamètre correspond au diamètre de l'arbre d'entraînement avant (4.4), dans le voisinage de l'embout (4.42), dans sa partie coulissante de (s*) active lors de l'opération de déverrouillage

7. Tiroir selon une des revendications 1 à 5, **caractérisé en ce que** l'arbre d'entraînement avant (4.4), et l'arbre de commutation (8.1 ou 8.2) cylindrique creux côté face frontale sont couplés l'un à l'autre au moyen d'un accouplement à goupille (6.1, 8.21).

8. Tiroir selon une des revendications 1 à 7, **caractérisé en ce que** l'arbre d'entraînement avant (4.4) est monté dans un corps de palier (4.5) qui est positionné en relation avec le mécanisme d'entraînement à vis (1) comportant un pignon (7.3) pour la transmission (7) mécanique.

9. Tiroir selon une des revendications 1 à 8, **caractérisé en ce qu'**un mécanisme à chaîne à rouleaux (7.2) est prévu comme transmission mécanique (7) entre le mécanisme d'entraînement avant (4) et le mécanisme à vis (1).

10. Tiroir selon une des revendications 1 à 8, **caractérisé en ce qu'**un mécanisme à courroie, en particulier un mécanisme à courroie crantée, est prévu comme transmission mécanique (7).

11. Tiroir selon une des revendications 1 à 10, **caractérisé en ce que** la première zone de rotation du mécanisme d'entraînement avant (4) jusqu'à la position d'encliquetage englobe un angle d'environ 180° à 270°, de préférence de 225°, et correspond ainsi sensiblement à la moitié voire aux trois quarts de la rotation de la poignée tournante (4.1).

12. Tiroir selon une des revendications 1 à 10, **caractérisé en ce que** la zone de rotation suivante pour l'actionnement des appareils de commutation (8) englobe un angle d'environ 90° et correspond ainsi sensiblement à un quart de tour de la poignée tournante (4.1) maintenue enfoncée à l'encontre de la force de l'élément élastique (4.6), dans la portion correspondante du chemin de came (4.22).
